# EUROPÄISCHE PATENTSCHRIFT

(11) **EP 1 382 425 B1**
(45) Veröffentlichungstag und Bekanntmachung des Hinweises auf die Patenterteilung: **23.08.2006**
(21) Anmeldenummer: 03011500.0
(22) Anmeldetag: 21.05.2003
(51) Int. Cl.: B29B 7/82, B29B 13/04, B29B 7/74, B29B 7/18

(54) **Verfahren zur Herstellung von Kautschukmischungen**
Method for producing rubber mixtures
Procédé de réalisation de mélanges de caoutchoucs

(30) Priorität: 12.07.2002 DE 10231524; 02.11.2002 DE 10251032
(43) Veröffentlichungstag der Anmeldung: 21.01.2004
(73) Patentinhaber: Continental Aktiengesellschaft, 30165 Hannover (DE)
(72) Erfinder: Peter, Julius, Dr., 1130 Wien (AT)

(56) Entgegenhaltungen:
- EP-A- 0 103 754
- DE-A- 4 407 144
- US-A- 1 614 999
- US-A- 5 108 188
- PETER J ET AL: "DAS TANDEM- MISCHVERFAHREN (TEIL 4)" KAUTSCHUK UND GUMMI - KUNSTSTOFFE, DR. ALFRED HUTHIG VERLAG GMBH. HEIDELBERG, DE, Bd. 46, Nr. 7, 1. Juli 1993 (1993-07-01), Seiten 545-549, XP000384143 ISSN: 0948-3276

## Beschreibung

Die Erfindung betrifft ein Verfahren zur Herstellung von Kautschukmischungen in einem Stempelkneter oder einer Aggregatkombination aus einem Stempelkneter und einem vorzugsweise unterhalb desselben angebrachten stempellosen Kneter.

Bei der Herstellung von Kautschukmischungen ist strebt man eine möglichst niedrige Mischungstemperatur an: beim Grundmischen wegen der besseren Füllstoffverteilung; beim Fertigmischen wegen der geringeren Gefahr vorzeitiger Anvulkanisation; bei wärmeempfindlichen Polymeren, beispielsweise bei Naturkautschuk, um eine Schädigung der Polymerketten durch die Einwirkung hoher Temperaturen zu vermeiden.

Die Reduktion der Mischungstemperatur ist daher seit Jahrzehnten Gegenstand der Maschinen- und Verfahrensentwicklung, wie z. B. durch die Entwicklung von Knetern mit ineinandergreifenden Rotoren, von HESC-Rotoren (High Efficiency, Super Cooling Rotoren), durch die unterschiedliche Lage der Kühlkanäle in den Knettrögen, durch den Einsatz niedriger Drehzahlen und vielen anderen Maßnahmen mehr.

Bei diesen Verfahren handelt es sich aber um eine indirekte Kühlung, bei der der den Kneter umschließende Trog oder der Rotor durch das in den Kühlkanälen umlaufende Wasser gekühlt wird und so die beim Mischen entstehende Wärme abgeführt wird. Das in den Kühlkanälen umlaufende Wasser hat keinen Kontakt mit der Mischung. Treten am Kneter Risse auf, muß der Kneter stillgelegt und repariert werden.

Ein grundsätzlicher Nachteil des Verfahrens der indirekten Kühlung durch umlaufendes Wasser im Trog oder in den Rotoren ist, dass man auf die Wärmeleitfähigkeit und die -kapazitäten der Metallschichten im Trog bzw. in den Rotoren angewiesen ist, wobei bekannt ist, dass insbesondere hochverschleissfeste Metalllegierungen eine schlechte Wärmeleitfähigkeit aufweisen.

Dies hat zur Folge, dass sich die Temperaturen der Mischung und der Metallmassen antizyklisch verhalten, d. h. bei dem erforderlichen Kühlprozess müssen während des Mischvorganges zunächst die Metallmassen des Kneters abgekühlt werden, bevor eine nennenswerte Kühlung des Mischgutes einsetzt. Die Herstellung von Kautschukmischungen in einer Mischstufe ("Einstufenverfahren") ist daher trotz vieler anderer Vorteile, wie z. B. geringer Platzbedarf, in der Regel auf kleine Kneter und/oder plastische, langsam vulkanisierende Mischung beschränkt und ist für eine ausreichende (online) Kühlung während des Mischprozesses oft mit langen Gesamtmischzeiten verbunden.

Um bei der Herstellung von Kautschukmischungen eine hinreichend niedrige Mischungstemperatur zu gewährleisten, werden daher derzeit 80 bis 90 % aller weltweit hergestellten Mischungen, insbesondere die in Großknetern hergestellten Reifenmischungen, in Zwei- oder Mehrstufenprozessen hergestellt, wobei es jeweils erforderlich ist, die Mischungen nach jeder Mischstufe aus dem Kneter auszuwerfen, auf einem Walzwerk oder einem Austragsextruder zu einem Fell zu Formen, abzukühlen und anschließend einem oder mehreren Mischprozess(en) zuzuführen. Diese Vorgehensweise ist mit hohem Kosten- und Zeitaufwand verbunden und daher unwirtschaftlich.

Aus der EP 0 472 931 A1 und der DE 37 02 833 A1 ist es bekannt, eine Kautschukmischung in einer Aggregatkombination aus einem Stempelkneter und einem darunter angeordneten stempellosen Kneter herzustellen, wobei es insbesondere bei dem Einsatz von stempellosen Knetern mit ineinandergreifenden Rotoren möglich ist, das Mischgut vor dem Zusatz weiterer Stoffe abzukühlen und so in einem Anlagenzyklus fertig zu mischen. Da der stempellose Kneter dabei zumeist mit niedrigerer Drehzahl betrieben wird, ist es möglich, den antizyklischen Temperaturverlauf zwischen dem Kneter und Mischung zu reduzieren, wodurch die erwünschte Kühlung der Mischung bereits zu einem früheren Zeitpunkt einsetzt und die Abkühlung der Mischung beschleunigt wird. In der US 5, 108, 188 wird bei dieser Aggregatkombination in stempellosen Kneter mit Luft gekühlt. Auch in KGK-Kautschuk Gummi Kunststoffe, 46. Jahrgang Nr. 7/93, 8.545-549 und der DE 44 07 144 A1 sind Verfahren zur Herstellung von Kautschukmischungen nach dem so genannten Tandem-Mischverfahren in der vorgenannten Aggregat kombination beshrieben.

Aber auch bei diesem Verfahren, insbesondere bei der Herstellung sehr heiß laufender Mischungen oder bei Mischungen, die nur eine sehr kurze Mischzeit benötigen, ist eine Unterstützung oder Verbesserung der Abkühlung wünschenswert.

Aus der Thermoplastverarbeitung auf Walzwerken, wie sie beispiels weise in der US 1, 614, 999 beschrieben ist, kennt man das Aufsprühen von wasserdampf auf die Walzeneinheit zu Kühlzwecken. Auch bein Verdichten von thermoplastischen Kunststoffabfällen kannt man das Einspritzen von Wasser zur Verhinderung des Schmelzens der Thermoplastik (s. EP 103 754 A1).

Einem direkten Zusatz von Wasser zur Kautschukmischung zu Kühlzwecken steht entgegen, dass Kautschukmischungen fast ausschließlich aus hydrophoben Mischungsbestandteilen (Kautschuk, paraffinische Weichmacher, Ruß, paraffinische Wachse etc.) bestehen, Wasser aber hydrophil ist.

In der EP 0 837 095 A1 ist ein Verfahren zur Herstellung einer Kieselsäure enthaltenden Kautschukmischung beschrieben, bei dem eine verbesserte Verteilung des Füllstoffes Kieselsäure und gute Vulkanisateigenschaften dadurch erzielt werden können, dass die Mischungen nach ganz bestimmten Temperaturprofilen geknetet werden. Die Ankopplung der Kieselsäure an das Silan-Kupplungsagens soll bei Temperaturen von 130 bis 140 °C erfolgen. Die Temperaturregelung kann durch die Rotationsgeschwindigkeit der Rotoren oder durch die Einbringung von Wasser direkt in die Mischung erfolgen. Das Wasser wird im letzteren Fall in die Mischung eingearbeitet. Aber auch diesem System haften, obwohl über die Kieselsäure ein teilweise hydrophobes Element eingebracht wird, die grundsätzlichen Mängel wasserenthaltender Mischungen an, wie z. B dass eingeschlossene Wasserreste in der Mischung verbleiben, die bei der späteren Verarbeitung, z. B. bei der Vulkanisation, zu Ungleichmäßigkeiten am Produkt führen.

Der Erfindung liegt daher die Aufgabe zu Grunde, bei einem Mischverfahren der eingangs genannten Art die Abkühlung zu verbessern.

Gelöst wird die gestellte Aufgabe erfindungsgemäß dadurch, dass auf die im Stempelkneter gemischte Mischung während des Mischprozesses bei gleichzeitiger Vergrößerung seines Arbeitsvolumens und/oder während des Entleervorganges und/oder bei zusätzlichem Vorhandensein eines stempellosen Kneters (Aggregatkombination) auf die in den stempellosen Kneter überführte Mischung im Verlaufe des weiteren Mischprozesses oberflächlich eine Flüssigkeit aufgebracht wird oder bei zusätzlichem Vorhandensein eines stempellosen Kneters (AggregatKombination) auf die inneren Metallflächen des stempellosen Kneters vor oder währen der Überführung des Mischgates von Stempelkneter in den stempellosen Kneter eine Flüssigkeit auf gebracht wird, wobei der Siedepunkt der Flüssigkeit unterhalb der angestrebten Endtemperatur der Mischung liegt und die Flüssigkeit in Verlauf der weiteren Verarbeitung rücksteindsfrei verdampft.

Die aufgebrachte, insbesondere kalte Flüssigkeit wird über seine Verdampfungswärme zur direkten Kühlung des Mischgutes genutzt. Die Flüssigkeit verdampft auf der heißen Oberfläche der Kautschukmischung und hinterlässt keine Rückstände auf der Mischung. Der Feuchtigkeitsgehalt der Mischung ist vor und nach dem Kühlprozess unverändert. Dabei ist es wichtig, dass die Flüssigkeit oberflächlich aufgebracht wird und nicht etwa in die Mischung eingearbeitet wird, denn nur bei der oberflächlichen Aufbringung kann die Flüssigkeit rückstandslos verdampfen und es kann effektiv gekühlt werden. Es verbleiben keine eingeschlossenen Flüssigkeitsreste in der Mischung, die bei der späteren Verarbeitung, z. B. bei der Vulkanisation, zu Ungleichmäßigkeiten am Produkt führen würden.
Da die zur Kühlung des Mischgutes dienende Flüssigkeit oberflächlich aufgebracht wird, ist ein wesentlicher Punkt, dass das Nutz-Volumen des Stempelkneters nicht verringert wird.

Besonders effektiv ist das erfindungsgemäße Verfahren bei Aggregatkombinationen aus Stempelkneter und einem vorzugsweise unterhalb desselben angeordneten stempellosen Kneter einsetzbar und dort wiederum besonders bevorzugt beim Entleerungsvorgang des Stempelkneters und/oder im stempellosen Kneter, da im stempellosen Kneter in der Regel bei niedrigeren Temperaturen gemischt wird und es daher auf eine besonders wirksame Kühlung ankommt.

Die Vergrößerung des Arbeitsvolumens des Stempelkneters kann durch Lüften des Stempels und/oder Vergrößerung des Achsabstandes der Rotoren während des Mischens und/oder durch Öffnen der Entleerungsklappe bewerkstelligt werden. Vorrichtungen, die eine Vergrößerung des Achsabstandes der Rotoren ermöglichen, sind z. B. aus der EP 0 230 333 A2 bekannt.

Die Aufgabe wird auch gelöst durch ein Verfahren zur Herstellung einer Kautschukmischung in einer Aggregatkombination aus einem Stempelkneter und einem vorzugsweise unterhalb desselben angebrachten stempellosen Kneter, bei dem die inneren Metallflächen des stempellosen Kneters vor oder während der Überführung des Mischgutes vom Stempelkneter in den stempellosen Kneter durch Aufbringung von Flüssigkeit gekühlt werden, wobei die Flüssigkeit im Verlauf der weiteren Verarbeitung rückstandsfrei verdampft wird.

Da es sich bei dem stempellosen Kneter um ein offenes System handelt, können vorteilhafterweise die bei der Verdampfung entstehende Gase ungehindert entweichen. Die inneren Metallflächen des Kneters, d. h. die Kneterwände und die Rotoren, werden von innen direkt mit einer Flüssigkeit gekühlt und die kühlen inneren Metallflächen bewirken dann eine Kühlung der in den stempellosen Kneter überführten Mischung. Dieses Verfahren ist bei der Aggregatkombination aus Stempelkneter und stempellosem Kneter in besonders wirtschaftlicher Weise durchführbar, da während der Kühlung des stempellosen Kneters gleichzeitig im Stempelkneter gemischt werden kann. Die aufgebrachte Flüssigkeit verdampft zum Teil an den heißen Metallwänden. Der nicht verdampfte Teil kann durch die Entleerungsöffnung abgelassen werden. Es ist aber bevorzugt, dass Flüssigkeitsreste nach dem Aufbringen auf die Metallflächen im stempellosen Kneter verbleiben. Diese Reste, werden spätestens im Verlauf der weiteren Mischarbeit durch die Enthalpie der aus dem Stempelkneter in den stempellosen Kneter entleerten Mischung verdampft und tragen auf diese Weise zur weiteren effektiven Abkühlung der Mischung bei.

Die Flüssigkeit kann durch Eindüsen und/oder Aufsprühen aufgebracht werden, um eine möglichst gleichmäßige und feine Verteilung der Flüssigkeit auf der Oberfläche der Kautschukmischung bzw. den inneren Metallflächen zu erzielen. Zu diesem Zweck können in die Kneterwand Einspritzdüsen eingebracht und/oder über dem stempellosen Kneter Sprühdüsen angebracht werden.

Es hat sich als vorteilhaft erwiesen, wenn die Verdampfung der auf das Mischgut oder die inneren Metallflächen aufgebrachten Flüssigkeit durch einen Luftstrom, insbesondere mittels eines Gebläses oder Ventilators, beschleunigt wird.

Je nach verwendeter Flüssigkeit und angestrebter Endtemperatur der Mischung kann durch die Absenkung des Siedepunktes der aufgebrachten Flüssigkeit durch Evakuierung der Kühlprozess beschleunigt oder ermöglicht werden. Die Abkühlung kann z. B. in vorteilhafter Weise verstärkt werden, indem - wie z. B. in der Anmeldung DE 40 27 261 C1 beschrieben - die Evakuierung durch Abschottung des Zwischenraumes zwischen der Entleerungsöffnung des Stempelkneters und der Einfüllöffnung des stempellosen Kneters und Anlegen eines Vakuums erfolgt.

Um eine ausreichende Kühlung des Mischgutes zu bewirken, hat es sich als vorteilhaft erwiesen, wenn pro 100 Gew.-Teile Mischung im Kneter 5 bis 20 Gew.-Teile Flüssigkeit auf das Mischgut oder die inneren Metallflächen aufgebracht werden.

Die Flüssigkeit kann in einer oder mehreren Portionen auf das Mischgut und/oder die inneren Metallflächen aufgebracht werden.

Die erfindungsgemäße Aufbringung von Flüssigkeit im Mischprozess bietet außerdem die Möglichkeit, andere Kautschukzuschlagstoffe, insbesondere reaktive Zuschlagstoffe, mit Hilfe der Flüssigkeit in Form einer Emulsion oder Suspension in das Mischgut einzubringen. Eine gleichmäßigere Verteilung der Zuschlagstoffe, wie z. B. Füllstoffe oder Vernetzungschemikalien, in der Kautschukmischung wird dadurch erreicht. Temperaturspitzen innerhalb der Mischung und ein Vorabreagieren werden durch die Kühlwirkung der Flüssigkeit vermieden.

Zur Optimierung der Verarbeitung, zur Vernetzung und zur Verbesserung der Haftungseigenschaften von Kautschukmischungen werden dem Kautschuk und/oder den Kautschukmischungen reaktive Zuschlagstoffe zugesetzt. Diese reaktiven Zuschlagstoffe beeinflussen die Plastizität der Kautschukmischungen, die Vernetzungsgeschwindigkeit der Mischungen, den Vernetzungsgrad, die Eigenschaften der Vulkanisate sowie die Haftung zu verschiedenen Materialien (z. B. textilen Festigkeitsträgern, Stahl, anderen Metallen, Kunststoffen usw.) und die Anbindung der Kautschukmoleküle an Füllstoffe z. B. an Kieselsäure.

Die reaktiven Zuschlagstoffe gehen dabei chemische Reaktionen ein, deren Reaktionsgeschwindigkeit den Gesetzen der chemischen Reaktionskinetik folgt, d. h., dass sich die Reaktionsgeschwindigkeit bei eine Temperaturerhöhung von 10 K ungefähr verdoppelt. Aus diesem Grund spielen bei der Verarbeitung von Mischungen mit reaktiven Zuschlagstoffen sowohl die Höhe der Temperatur als auch eine gleichmäßige Temperaturverteilung innerhalb der Mischung eine wichtige Rolle. Bei der Herstellung von Mischungen auf Walzwerken, wie es früher üblich war, weisen die Mischungen eine niedrige Temperatur und eine relativ gleichmäßige Temperaturverteilung auf, während bei den heute fast ausschließlich verwendeten Knetern (Innenmischern) heißer und inhomogener gemischt wird.

In den Knetern findet der maximale Energieeintrag zwischen den Wirkkanten der Rotoren und der Kneterwand statt, dadurch wird der Kautschuk bzw. die Kautschukmischung inhomogen erwärmt. Eine Folge davon ist, dass die Zusatzstoffe bevorzugt dort eingemischt werden, wo der Kautschuk oder die Kautschukmischung bereits am weichsten und aufnahmefähigsten geworden ist. Je höher die Temperatur, je inhomogener die Temperaturverteilung und je ungleichmäßiger die lokale Konzentration an reaktiven Zuschlagstoffen, desto größer ist die Gefahr, dass die reaktiven Zuschlagstoffe, z. B. Vernetzungs-, Abbau- und/oder Haftmittel, bereits vorzeitig reagieren (Scorch), bevor die gleichmäßige Verteilung überhaupt erst beginnen kann.

Da die Zuschlagstoffe bei Stempelknetern nur während des Lüftens des Stempels zugegeben werden können, nimmt die Gefahr lokaler Überkonzentrationen bei diesem Mischertyp zu. Die Gefahr steigt noch an, wenn die reaktiven Zuschlagstoffe - wie heutzutage üblich - zur Verbesserung der Handhabung und und/oder zur Reduktion der Staubbelastung in Polyethylenfolien verpackt zugesetzt werden. In diesem Fall muss erst das Polyethylen geschmolzen werden, bevor die Substanzen verteilt werden.

Bei einem stempellosen Kneter können die Zusatzstoffe, sofern dieser z. B. wie in einer Tandemanordnung üblich unter einem Stempelkneter angebracht ist, über ein Fallrohr zugegeben werden. In diesem Fall besteht aber die Gefahr von Verstopfungen im Fallrohr.

All den genannten Nachteilen bei der Einbringung von insbesondere reaktiven Zuschlagstoffen kann dadurch entgegengewirkt werden, dass bei dem erfindungsgemäßen Verfahren die Zuschlagstoffe, insbesondere die reaktiven Zuschlagstoffe, emulgiert oder suspendiert in der (Kühl-)Flüssigkeit in die Mischung eingebracht werden. Die Emulsionen oder Suspensionen können durch Eindüsen oder Aufsprühen in die Kneter ein- und auf die Mischung aufgebracht werden, wobei es besonders bevorzugt ist, wenn die reaktiven Zuschlagstoffe als Emulsion oder Suspension in den stempellosen Kneter eingebracht werden, da die Temperaturen der Mischung im stempellosen Kneter im Allgemeinen nicht so hoch sind.

Die Flüssigkeit wirkt bei der Einbringung auf bzw. in die Kautschukmischung dann gleichzeitig als Kühlmittel und, da sie bevorzugt an den heißesten Stellen des Kneters verdampft, als Thermostat. Die Mischung zerfällt darüber hinaus im Kneter bei der Einbringung von Flüssigkeit (Emulsion, Suspension) in kleinere Mischungsklumpen auf deren Oberfläche die reaktiven Zuschlagstoffe dann großflächig vorverteilt sind und nach dem Verdunsten der Flüssigkeit gut und gleichmäßig weiter eingemischt werden können.

Die Zuschlagstoffe werden bevorzugt in einem Flüssigkeitsvolumen emulgiert oder suspendiert, das zwischen 0,1 bis 10 % des Volumens der Mischung beträgt.

Als zum Kühlen und gegebenenfalls Emulgieren oder Suspendieren verwendete Flüssigkeit können verschiedenste Flüssigkeiten verwendet werden. Besonders bevorzugt werden allerdings Wasser und Ethanol eingesetzt. Diese Substanzen sind in großen Mengen verfügbar, haben einen niedrigen Siedepunkt und sind im Hinblick auf die Umweltbelastung und der leichten Regenerierungsmöglichkeit nicht als kritisch anzusehen. Wird Wasser als Flüssigkeit verwendet, hat es sich als vorteilhaft erwiesen, dass das Wasser mit einer Temperatur von 70 bis 90 °C auf die Mischung aufgebracht wird. Das Wasser kann auf diese Weise schneller verdampft werden und die Verdampfungswärme kühlt die Mischung effektiv ab.

Bei einer bevorzugten Ausführungsform der Erfindung wird dem zur Kühlung eingesetzten Wasser zumindest ein Netzmittel zugesetzt. Das Netzmittel verringert die Oberflächenspannung und ist in der Lage, die Oberfläche weitgehend vollständig und flächig zu benetzen, wodurch der Abkühlungseffekt weiter verbessert wird.

Als Netzmittel eignen sich anionische, kationische oder nicht ionische Netzmittel. Das oder die Netzmittel werden dabei dem zur Kühlung verwendeten Wasser in Konzentrationen von 0,01 bis 5 Gew.-%, vorzugsweise von 0,2 bis 1 Gew.-% zugesetzt. Dabei ist es ferner von Vorteil, wenn solche Netzmittel verwendet werden, die Kalkablagerungen verhindern oder verzögern.

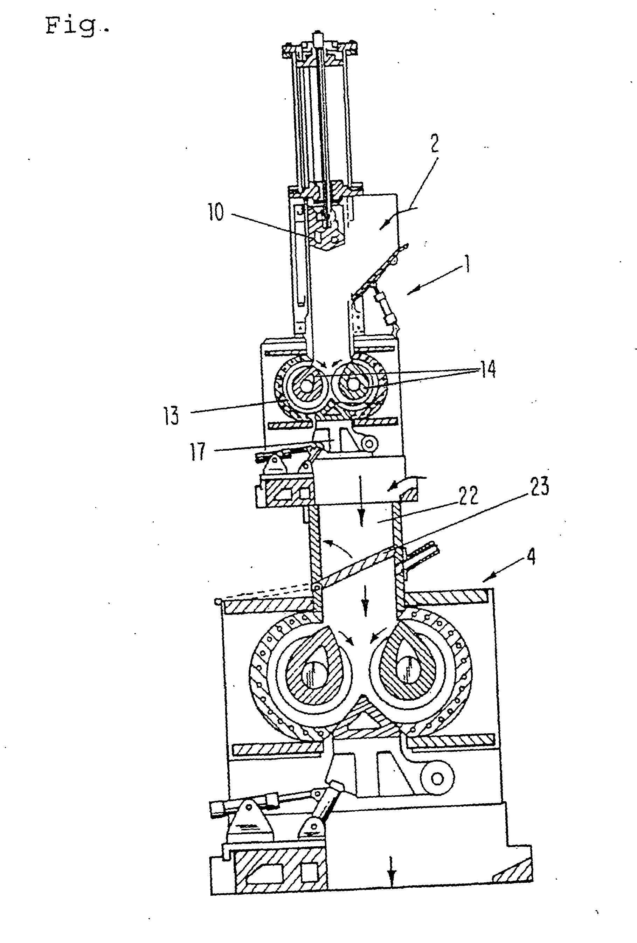

Die Erfindung wird nun anhand der Zeichnung, die ein Ausführungsbeispiel darstellt, näher beschrieben. Dabei zeigt die einzige Zeichnungsfigur einen senkrechten Schnitt durch jene erfindungsgemäße Variante einer Vorrichtung zur Herstellung von Kautschukmischungen, die einen Stempelkneter und einen stempellosen Kneter aufweist.

Im Nachfolgenden werden nur die wesentlichen Bestandteile dieser Vorrichtung beschrieben, bezüglich weiterer Details wird auf die EP 0 472 931 A1 verwiesen, die diese Kneteranordnung betrifft und ausführlicher beschreibt.

Der in der Zeichnungsfigur obere und einen auf- und abbewegbaren Stempel 10 aufweisende Stempelkneter 1 weist eine Beschickungsöffnung 2 auf, über welche die die Grundmischung bildenden Mischungsbestandteile der Mischkammer 13 zugeführt werden. In der Mischkammer 13 befinden sich zwei den eigentlichen Mischprozess nach dem Absenken des Stempels 10 durchführende Rotoren 14.

Nach dem Fertigstellen der Grundmischung wird die Mischkammer 13 durch Aufklappen einer Entleerungsklappe 17 in Form eines Sattels geöffnet und das Mischgut gelangt im freien Fall über einen kanalförmigen Zwischenraum 22 in den zweiten stempellos ausgeführten Kneter 4. Bei der Übergabe der Mischungen vom Kneter 1 in den Kneter 4 ist eine zwischen den Knetern 1, 4 vorgesehene Klappe 23 in ihre strichliniert eingezeichnete offene Stellung geschwenkt worden. Im stempellosen Kneter 4 können dem Mischgut weitere, insbesondere reaktive Zusatzstoffe, wie z. B. der Vulkanisationschemikalien zugefügt werden.

Gemäß der Erfindung wird das Mischgut im stempellosen Kneter 4 zur Abkühlung mit einer Flüssigkeit, z. B. Wasser, die in ihr emulgierte oder suspendierte reaktive Zuschlagstoffe enthalten kann, besprüht oder die inneren Metallflächen des stempellosen Kneters 4 werden mit einer Flüssigkeit, die in ihr emulgierte oder suspendierte reaktive Zuschlagstoffe enthalten kann, besprüht. Dies kann durch ein Aufsprühen von Flüssigkeit mit oder ohne Einsatz von Düsen erfolgen. Die Düsen bzw. die Einrichtungen, über welche die Flüssigkeit aufgesprüht wird, sind an den betreffenden bzw. der betreffenden Stelle(n) positioniert bzw. werden bei Bedarf dort positioniert und eingesetzt.

Es ist aber auch möglich, die Flüssigkeit bereits im Stempelkneter 1, vorzugsweise kurz vor oder während des Entleerungsvorganges, zuzusetzen. In diesem Fall wird die Flüssigkeit über Einspritzdüsen mit Druck in den Kneter eingespritzt.

Das Einspritzen erfolgt im Stempelkneter 1 und zwar unmittelbar bevor die Entleerungsklappe 17 geöffnet und das Mischgut in den zweiten stempellosen Kneter 4 überführt wird.

Dem zur Kühlung verwendeten Wasser bzw. der Emulsion oder Suspension kann ein Netzmittel zugesetzt sein, um eine möglichst großflächige Verteilung auf der Oberfläche des Mischgutes bzw. auf den inneren Metallflächen des stempellosen Kneters 4 zu erzielen. Als Netzmittel können bekannte anionische, katonische oder nicht ionische Mittel verwendet werden. Der Anteil an Netzmittel im Wasser beträgt insbesondere zwischen 0,01 und 5 %, vorzugsweise zwischen 0,2 und 1 %. Von Vorteil ist es ferner, wenn Netzmittel verwendet werden, die etwaige Kalkablagerungen verhindern oder verzögern. Selbstverständlich ist es darüber hinaus günstig, wenn das aufgesprühte und insbesondere netzmittelhaltige Wasser auf einen möglichst großen Teil der Oberfläche des Mischgutes oder der inneren Metallflächen aufgesprüht wird. Um den Kühlvorgang zu beschleunigen, ist es darüber hinaus auch von Vorteil, wenn unmittelbar nach dem Aufsprühen des Wassers durch ein Einblasen bzw. Zuführen von Luft die Verdunstung beschleunigt und damit die Kühlung verbessert wird.

Eine weitere Möglichkeit ist es, den Zwischenraum zwischen der Entleerungsöffnung des Stempelkneters und der Beschickungsöffnung des stempellosen Kneters abzuschotten und den Verdunstungsvorgang des Wassers durch Anlegen eines Vakuums weiter zu beschleunigen und das Mischgut von Resten an Wasser, niedermolekularen Anteilen an Chemikalien und/oder oligomeren Polymerisationschemikalien zu befreien.

## Patentansprüche

1. Verfahren zur Herstellung von Kautschukmischungen in einem Stempelkneter (1) oder einer Aggregatkombination aus einem Stempelkneter (1) und einem vorzugsweise unterhalb desselben angebrachten stempellosen Kneter (4),
**dadurch gekennzeichnet,**
**dass** auf die im Stempelkneter (1) gemischte Mischung während des Mischprozesses bei gleichzeitiger Vergrößerung seines Arbeitsvolumens und/oder während des Entleervorganges und/oder bei zusätzlichem Vorhandensein eines stempellosen Kneters (4) Aggregatkombination, auf die in den stempellosen Kneter (4) überführte Mischung im Verlaufe des weiteren Mischprozesses oberflächlich eine Flüssigkeit aufgebracht wird oder bei zusätzlichem Vorhandensein eines stempellosen Kneters (4), Aggregatkombination auf die inneren Metallflächen des stempellosen Kneters (4) vor oder während der Überführung des Mischgutes vom Stempelkneter (1) in den stempellosen Kneter (4) eine Flüssigkeit aufgebracht wird,
wobei der Siedepunkt der Flüssigkeit unterhalb der angestrebten Endtemperatur der Mischung liegt und die Flüssigkeit im Verlauf der weiteren Verarbeitung rückstandsfrei verdampft wird.

2. Verfahren nach Anspruch 1, **dadurch gekennzeichnet, dass** das Arbeitsvolumen des Stempelkneters (1) durch Lüften des Stempels (10) und/oder Vergrößerung des Achsabstandes der Rotoren (14) und/oder durch Öffnen der Entleerungsklappe (17) erfolgt.

3. Verfahren nach Anspruch 1 oder 2, **dadurch gekennzeichnet, dass** die Flüssigkeit durch Eindüsen und/oder Aufsprühen aufgebracht wird.

4. Verfahren nach zumindest einem der Ansprüche 1 bis 3, **dadurch gekennzeichnet, dass** die Verdampfung der aufgebrachten Flüssigkeit durch einen Luftstrom, insbesondere mittels eines Gebläses oder Ventilators, beschleunigt wird.

5. Verfahren nach zumindest einem der Ansprüche 1 bis 4, **dadurch gekennzeichnet, dass** der Siedepunkt der aufgebrachten Flüssigkeit durch Evakuierung unter die angestrebte Endtemperatur der Mischung gesenkt wird.

6. Verfahren nach Anspruch 5, **dadurch gekennzeichnet, dass** die Evakuierung durch Abschottung des Zwischenraumes (22) zwischen der Entleerungsöffnung des Stempelkneters (1) und der Einfüllöffnung des stempellosen Kneters (4) und Anlegen eines Vakuums erfolgt.

7. Verfahren nach zumindest einem der Ansprüche 1 bis 6, **dadurch gekennzeichnet, dass** pro 100 Gew.-Teile Mischung im Kneter 5 bis 20 Gew.-Teile Flüssigkeit aufgebracht werden.

8. Verfahren nach zumindest einem der Ansprüche 1 bis 7, **dadurch gekennzeichnet, dass** die Flüssigkeit in einer oder mehreren Portionen aufgebracht wird.

9. Verfahren nach zumindest einem der Ansprüche 1 bis 6 und 8, **dadurch gekennzeichnet, dass** die Flüssigkeit emulgierte oder suspendierte Kautschukzuschlagstoffe, insbesondere reaktive Zuschlagstoffe, enthält, die in die Mischung eingebracht werden.

10. Verfahren nach Anspruch 9, **dadurch gekennzeichnet, dass** die Emulsion oder Suspension in den stempellosen Kneter eingebracht wird.

11. Verfahren nach Anspruch 9 oder 10, **dadurch gekennzeichnet, dass** die Zuschlagstoffe in einem Flüssigkeitsvolumen emulgiert oder suspendiert werden, das zwischen 0,1 bis 10 % des Volumens der Mischung beträgt.

12. Verfahren nach zumindest einem der Ansprüche 1 bis 11, **dadurch gekennzeichnet, dass** als Flüssigkeit Wasser eingesetzt wird.

13. Verfahren nach Anspruch 12, **dadurch gekennzeichnet, dass** dem Wasser zumindest ein Netzmittel zugesetzt wird.

14. Verfahren nach Anspruch 13, **dadurch gekennzeichnet, dass** dem Wasser ein anionisches, ein kationisches oder ein nicht ionisches Netzmittel zugesetzt wird

15. Verfahren nach einem der Ansprüche 13 oder 14, **dadurch gekennzeichnet, dass** das bzw. die Netzmittel in einer Konzentration von 0,01 bis 5 Gew.-%, vorzugsweise 0,2 bis 1 Gew.-%, zugesetzt wird bzw. werden.

16. Verfahren nach zumindest einem der Ansprüche 13 bis 15, **dadurch gekennzeichnet, dass** dem Wasser Netzmittel zusetzt werden, die Kalkablagerungen verhindern.

17. Verfahren nach zumindest einem der Ansprüche 1 bis 11, **dadurch gekennzeichnet, dass** als Flüssigkeit Ethanol eingesetzt wird.

## Claims

1. Method for producing rubber mixtures in a ram kneader (1) or in a combined assembly composed of a ram kneader (1) and a ram-less kneader (4) disposed preferably beneath said kneader (1), **characterized in that** a liquid is applied superficially to the mixture mixed in the ram kneader (1) during the mixing operation, with a simultaneous enlargement of the working volume of said kneader (1), and/or during the discharge procedure and/or, in the case of the additional presence of a ram-less kneader (4), combined assembly, to the mixture transferred into the ram-less kneader (4) in the course of the further mixing operation, or a liquid is applied, in the case of the additional presence of a ram-less kneader (4), combined assembly, to the inner metal surfaces of the ram-less kneader (4) before or while the material being mixed is transferred from the ram kneader (1) into the ram-less kneader (4), the boiling point of the liquid being below the target end temperature of the mixture, and the liquid being evaporated without residue in the course of further processing.

2. Method according to Claim 1, **characterized in that** the working volume of the ram kneader (1) is enlarged by venting of the ram (10) and/or enlargement of the interaxial spacing of the rotors (14) and/or by opening of the discharge valve (17).

3. Method according to Claim 1 or 2, **characterized in that** the liquid is applied by nozzle introduction and/or spray application.

4. Method according to at least one of Claims 1 to 3, **characterized in that** the evaporation of the applied liquid is accelerated by a stream of air, in particular by means of a blower or fan.

5. Method according to at least one of Claims 1 to 4, **characterized in that** the boiling point of the applied liquid is lowered by evacuation below the target end temperature of the mixture.

6. Method according to Claim 5, **characterized in that** the evacuation is accomplished by closing off the space (22) between the discharge aperture of the ram kneader (1) and the feed aperture of the ram-less kneader (4) and applying a vacuum.

7. Method according to at least one of Claims 1 to 6, **characterized in that** per 100 parts by weight of mixture in the kneader 5 to 20 parts by weight of liquid are applied.

8. Method according to at least one of Claims 1 to 7, **characterized in that** the liquid is applied in one or more portions.

9. Method according to at least one of Claims 1 to 6 and 8, **characterized in that** the liquid comprises emulsified or suspended rubber additives, especially reactive additives, which are incorporated into the mixture.

10. Method according to Claim 9, **characterized in that** the emulsion or suspension is introduced into the ram-less kneader.

11. Method according to Claim 9 or 10, **characterized in that** the additives are emulsified or suspended in a volume of liquid that is between 0.1% to 10% of the volume of the mixture.

12. Method according to at least one of Claims 1 to 11, **characterized in that** water is used as liquid.

13. Method according to Claim 12, **characterized in that** at least one wetting agent is added to the water.

14. Method according to Claim 13, **characterized in that** an anionic, a cationic or a nonionic wetting agent is added to the water.

15. Method according to either of Claims 13 and 14, **characterized in that** the wetting agent or agents is or are added in a concentration of 0.01% to 5% by weight, preferably 0.2% to 10% by weight.

16. Method according to at least one of Claims 13 to 15, **characterized in that** wetting agents that prevent limescale are added to the water.

17. Method according to at least one of Claims 1 to 11, **characterized in that** ethanol is used as liquid.

## Revendications

1. Procédé de préparation de mélanges de caoutchoucs dans un pétrin (1) à piston ou une combinaison d'un pétrin (1) à piston et d'un pétrin (4) sans piston installé de préférence en dessous du pétrin à piston,
**caractérisé en ce que**
un liquide est appliqué sur le mélange présent dans le pétrin (1) à piston pendant l'opération de mélange au cours de laquelle son volume de travail augmente et/ou pendant l'opération de vidange, et/ou, en cas de présence d'un pétrin supplémentaire (4) sans piston (combinaison de machines), un liquide est appliqué à la surface du mélange transféré dans le pétrin (4) sans piston au cours de la poursuite de l'opération de mélange, ou, en cas de présence d'un pétrin supplémentaire (4) sans piston (combinaison de machines), un liquide est appliqué sur la surface métallique intérieure du pétrin (4) sans piston ou pendant le transfert du produit mélangé depuis le pétrin (1) à piston jusque dans le pétrin (4) sans piston,
le point d'ébullition du liquide étant plus bas que la température finale visée du mélange et le liquide étant évaporé sans laisser de résidu au cours de la poursuite du traitement.

2. Procédé selon la revendication 1, **caractérisé en ce que** l'augmentation du volume de travail du pétrin (1) à piston s'effectue par relèvement du piston (10) et/ou par augmentation de la distance axiale entre les rotors (14) et/ou par ouverture du clapet d'évacuation (17).

3. Procédé selon les revendications 1 ou 2, **caractérisé en ce que** le liquide est apporté par injection et/ou par aspersion.

4. Procédé selon au moins l'une des revendications 1 à 3, **caractérisé en ce que** l'évaporation du liquide appliqué est accélérée par un écoulement d'air, en particulier au moyen d'un ventilateur ou d'une soufflante.

5. Procédé selon au moins l'une des revendications 1 à 4, **caractérisé en ce que** le point d'ébullition du liquide apporté est abaissé par mise en dépression en dessous de la température finale visée pour le mélange.

6. Procédé selon la revendication 5, **caractérisé en ce que** la mise en dépression s'effectue par cloisonnement de l'espace intermédiaire (22) entre l'ouverture de vidange du pétrin (1) à piston et l'ouverture de remplissage du pétrin (4) sans piston et application d'un vide.

7. Procédé selon au moins l'une des revendications 1 à 6, **caractérisé en ce que** pour 100 parties en poids du mélange dans le pétrin, on apporte de 5 à 20 parties de liquide.

8. Procédé selon au moins l'une des revendications 1 à 7, **caractérisé en ce que** le liquide est apporté en une ou plusieurs portions.

9. Procédé selon au moins l'une des revendications 1 à 6 et 8, **caractérisé en ce que** le liquide contient des additifs pour caoutchouc, en particulier des additifs réactifs, en émulsion ou en suspension dans le liquide, qui sont apportés dans le mélange.

10. Procédé selon la revendication 9, **caractérisé en ce que** l'émulsion ou la suspension est apportée dans le pétrin sans piston.

11. Procédé selon les revendications 9 ou 10, **caractérisé en ce que** les additifs sont mis en émulsion ou en suspension dans un volume de liquide qui représente de 0,1 à 10 % du volume du mélange.

12. Procédé selon au moins l'une des revendications 1 à 11, **caractérisé en ce que** l'on utilise de l'eau comme liquide.

13. Procédé selon la revendication 12, **caractérisé en ce que** l'on ajoute à l'eau un agent mouillant.

14. Procédé selon la revendication 13, **caractérisé en ce que** l'on ajoute à l'eau un agent mouillant anionique, un agent mouillant cationique ou un agent mouillant non ionique.

15. Procédé selon l'une des revendications 13 ou 14, **caractérisé en ce que** le ou les agent(s) mouillant(s) est/sont ajouté(s) à une concentration de 0,01 à 5 % en poids et de préférence de 0,2 à 1 % en poids.

16. Procédé selon au moins l'une des revendications 13 à 15, **caractérisé en ce que** l'on ajoute à l'eau des agents mouillants qui empêchent les dépôts de calcaire.

17. Procédé selon l'une des revendications 1 à 11, **caractérisé en ce que** comme liquide, on utilise de l'éthanol.
